# EUROPEAN PATENT APPLICATION

(11) **EP 0 812 053 A1**
(43) Date of publication of application: **10.12.1997**
(21) Application number: 96830319.8
(22) Date of filing: 05.06.1996
(51) Int. Cl.: H02K 17/32, H02P 1/34

(54) **Variable-reactance immersed asynchronous motor, particularly adapted for hydraulic elevators and hoists**

(71) Applicant: Ciampi, Gianfranco, 27100 Pavia (IT)
(72) Inventor: Ciampi, Gianfranco, 27100 Pavia (IT)
(74) Representative: Buzzi, Franco

(57) **Abstract**

An immersed asynchronous electrical motor (1), particularly suitable to drive hydraulic lifts and hoists, having a ferromagnetic material mass (6) arranged at one side of the rotor (4). The rotor (4) and the mass (6), rigidly secured in rotation to each other, are axially displaceable along the shaft (5) of the motor (1) upon start. During the initial start-up phase the entire mass (6) and only one portion of the rotor (4) are positioned inside of the stator (2), whereby the mass (6) determines a high reactance and the residual operative flux, pertaining to the portion of the rotor (4) located inside of the stator (2), generates reduced starting torques, with reduced input starting currents, causing rotation and progressive axial displacement of the rotor (4) and mass (6). At the end of start the entire rotor (4) is inside of the stator (2), so as to obtain the normal motor performance. The motor (1) is thus self-limiting the input current also in case one supply phase is missing or in case of wrong rotation direction.

## Description

The present invention is generally related to single and three-phase asynchronous electrical motors, constituted by an outer annular stator and an inner annular rotor coupled onto a support and power transmission shaft.

More particularly, the invention is directed to an asynchronous electrical motor of the above-mentioned type, intended to operate in a fully immersed condition within a hydraulic fluid, normally oil, for actuation of a hydraulic lift or hoist.

In the asynchronous electrical motors of the above-referenced type in general a problem subsists in connection with performing progressive start with reduced currents and providing, as far as three-phase motors are concerned, a limitation of the input current in case of lack of one phase in the supply line. When the motor is employed in a fully immersed condition in oil for driving pumps of hydraulic lifts and hoists, it is more and more important and in many instances essential to perform progressive start of the motor with reduced currents, in order to limit voltage drooping upon start and thus the contractual power employed for the supply line, as well as with reduced torque in order to prevent abrupt stresses and start-up noise.

According to the prior art, the following systems are traditionally provided for giving a solution to the above-referenced problem:
- a winding star-delta switching. This system reduces the starting current by virtue of the initial star connection, but transfers the problem to the subsequent delta switching. Actually, owing to the unavoidable short desactivation of the motor during the commutation stage and to the consequent speed slowing down (as a function of the fluidity degree and thus of the temperature of the oil within which the motor is immersed), high current peaks develop when switching to the delta connection supply. On the other hand, this solution involves three solenoid switches, a timer and thus a dedicated control board;
- three supplementary resistances or impedances, for a supply voltage drooping upon starting-up of the motor, which are then short-circuited following start. In this case switching from the starting to the working phases is less abrupt as compared to the preceding case, but is however performed by steps, without continuity. Moreover in this case an additional solenoid switch and an additional timer are required, further to the above three resistances or impedances, and thus a special control board is still required;
- an electronic control device, usually designated as "soft starter", for progressively increasing the supply voltage during the acceleration stage of the motor. This device is complex and expensive and, though providing a satisfactory solution to the problem of reducing the starting current, is inherently a generator of huge harmonic disturbances on the mains, which involve employing a further expensive filter. Moreover this device requires a sophisticated constructive technology in order to reach an acceptable reliability degree.

None of the above-listed known solutions can therefore give a complete and economical solution to the problem set for at the beginning.

On the other hand, any anomalous electrical supply conditions, even for a short time, may seriously affect reliability of the motor over the time, and thus operation life thereof. In order to protect the motor from any such anomalous conditions, low-inertia thermal protections employing termistor detectors have been provided. These protections, while being efficient when properly connected, unfortunately are often excluded, particularly during preliminary checking when installing the lift equipment, whereby the motor remains exposed to the risk that any operation with one missing phase in the supply line or with wrong rotation direction, may cause in a short time quick ageing of the winding and thus a drastic reduction of the operation life of the motor.

The object of the present invention is to overcome the above drawbacks, and to provide an asynchronous electrical motor of the type defined at the beginning, with a simple, cheap and reliable system for progressive starting thereof with reduced currents and thus with a self-limiting effect of the supply current, in case of lack of one supply phase (for three-phase motors) or in the case of wrong direction of rotation, this being achieved automatically with the only and direct supply of the motor under nominal voltage, without any need of switchings or auxiliary devices and, therefore, with an elementary control board.

According to the invention this object is essentially reached by virtue of the fact that:
- the rotor of the motor is axially slidable with respect to the stator, along the support shaft, between an initial start-up position, in which it is partially located outside of the stator, and a final end-of-start position in which it is entirely positioned inside of the stator;
- a ferromagnetic material mass is rigidly secured to the rotor, which in said initial position of the rotor is located inside of the stator, and in said final position of the rotor is positioned outside of the stator.

Due to this idea of solution, during the starting phase of the motor according to the invention a variable leakage reactance is obtained, which is high during the initial stage and is progressively reduced until the end of start. Actually, in the initial start-up stage the portion of the magnetic flux flowing through the ferromagnetic material mass positioned within the stator is leakage flux (high reactance), and the residual quantity of flux related to the portion of the rotor positioned within the stator generates reduced currents and torques. Following its axial displacement along the support shaft, due to the motor torque and thus to the initial rotation of the rotor itself, the ferromagnetic material mass is progressively shifted outside of the stator, while simultaneously the rotor is entirely displaced inside of the stator. At the end of start the entire ferromagnetic material mass is located outside of the stator, thus becoming only a flywheel, while the rotor, which is entirely placed inside of the stator, ensures normal performances in terms of torque/power of the motor, with normal operation electrical inputs. In case of anomalous supply with one missing phase upon starting the motor, neither torques nor, therefore, rotation and consequent axial displacement of the rotor + ferromagnetic material mass assembly are generated, whereby the currents are quite reduced, even with the rotor being stationary, owing to leakage of the flux within the ferromagnetic material mass. Same self-limitation of the current is achieved also in case of wrong direction of rotation, since in such a case axial displacement of the rotor + ferromagnetic material mass assembly from said initial position to the final position is prevented, thus maintaining the aforesaid current and torque limitation.

In order to perform axial displacement of the rotor + ferromagnetic material mass assembly between said initial and final positions, a helical coupling thereof with the support shaft is conveniently provided.

Preventing displacement of the rotor + ferromagnetic material mass assembly as explained in the above, in the case of wrong direction of rotation, is achieved through a proper combination between the direction of rotation of the motor and the orientation of the above helical coupling on the support shaft, so that in case of wrong direction of rotation the assembly is moved towards the initial stop position instead than toward the final position.

The invention contemplates elastic or merely gravity expedients for returning the rotor + ferromagnetic material mass assembly from the final position to the initial position following stop of the motor, as well as a fluid damping system for slowing down the terminal phase of axial displacement of the rotor + ferromagnetic material mass assembly in proximity of the final position and of the initial position.

The ferromagnetic material mass may be constituted by a pack of annular disks, or by a one-piece ring.

A particular embodiment of the invention further provides a peculiar coupling system between the rotor and the ferromagnetic material mass, suitable to be carried out in a remarkably simple and functional way.

The invention will now be disclosed in detail with reference to the accompanying drawings, purely provided by way of non-limiting example, in which:
- figure 1 is a partially axially sectioned diagrammatic view of a first embodiment of the motor according to the invention, depicted in a first operative condition,
- figure 2 is a view similar to figure 1 showing the motor in a second operative position, and
- figures 3 and 4 are two views similar to figure 1 and to figure 2, respectively, showing a second and preferred embodiment of the invention.

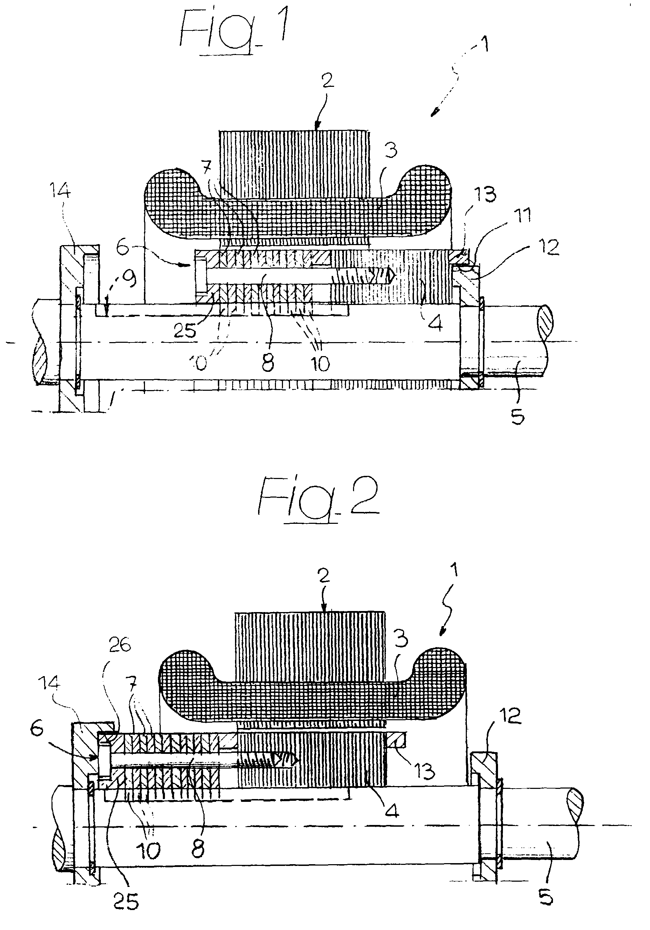

Referring initially to figures 1 and 2, reference numeral 1 generally designates an asynchronous electrical motor (for instance a three-phase motor) particularly intended to be employed, in a fully oil immersed condition, for operating a hydraulic lift or hoist. As it is diagrammatically depicted in these figures, the electrical motor 1 essentially comprises an outer annular stator 2 having a stator winding 3, and an annular inner rotor 4 coaxial with the stator 2 and rotatably coupled onto a support shaft 5 for the power transmission.

According to a first aspect of the invention, a ferromagnetic material (iron or the like) mass 6 is rigidly connected to one end of the rotor 4, which in the case of the example shown in figures 1 and 2 is constituted by a pack of annular blank disks coaxial with the rotor 4 and longitudinally tightened to one another by means of axial screws 8 and a disk-holder ring 25. The same screws 8 rigidly connect the ferromagnetic material mass 6 and the rotor 4 to each other.

According to another fundamental aspect of the invention, the rotor 4 and the ferromagnetic material mass 6 secured thereto are axially slidable with respect to the stator 2, along the support shaft 5, between an initial start-up position shown in figure 1, and a final end-of-start position shown in figure 2. Axial displacement between the initial position and the final position is performed by means of a helical coupling between the rotor 4 + mass 6 assembly and the support shaft 5: to such effect, an outer helical groove 9 is formed on the shaft 5, into which radial teeth 10 inwardly projecting from the annular disks 7, are engaged. It is however to be pointed out that, as an alternative, equivalent systems might be employed: therefore, the above disclosed helical coupling is to be viewed in a non-limiting way.

The initial position (figure 1) and the terminal position (figure 2) are defined by abutment of the rotor 4 + mass 6 assembly against respective stop members. As far as the initial position is concerned, this stop member is defined by a stop ring 12 axially secured onto the shaft 5, against which the lamination pack of the rotor 4 abuts, thus forcing the oil through a labyrinth 11 defined between the stop ring 12 and the corresponding short-circuit ring 13 of the rotor 4. In operation a hydraulic-damping braking of the longitudinal displacement of the rotor 4 + mass 6 assembly in proximity of said initial position is thus determined , so as to avoid abrupt impacts.

As far as the final position is concerned, the stop member is constituted by a stop ring 14 axially secured onto the shaft 5, against which the disk-holder ring 25 goes into abutment, thus determining in operation a labyrinth 26 through which the oil is forced so as to hydraulically damp the longitudinal movement of the rotor 4 + mass 6 assembly in proximity of said final position, as in the case disclosed in connection with the initial position.

As it can be clearly seen in figure 1, in the initial position the entire mass 6 formed by the disk pack 7 and only an axial portion of the rotor 4 are placed within the stator 2. In the final position shown in figure 2, the entire rotor 4 is located within the stator 2, while the mass 6 is substantially entirely positioned outside of the stator 2.

Operation of the motor 1, with specific reference to the starting phase, is as follows.

Upon start-up, the arrangement is corresponding to that shown in figure 1, whereby the ferromagnetic material mass 6 determines a high reactance (leakage flux). The residual useful flux, which is affecting the portion of the rotor 4 arranged inside of the stator 2, generates reduced current and torques, which produce rotation and progressive axial displacement of the rotor 4 + mass 6 assembly along the shaft 5, by means of the helical coupling disclosed in the above. At the end of the starting phase, the configuration is that shown in figure 2, in which the rotor 4 is entirely placed inside of the stator 2, thus obtaining the normal performances of the motor. The mass 6, driven outside of the stator 2, thus acts only as a flywheel mass.

In case at the initial stage of starting (figure 1) anomalous electrical supply with one missing phase occurs, neither torques nor, therefore, rotation and axial displacement of the rotor 4 + mass 6 assembly take place, whereby the currents are quite reduced, even with the rotor being stationary, by leakage of the flux through the mass 6. The same current self-limitation is achieved even in case the motor is started in the wrong direction of rotation, which prevents axial displacement of the rotor 4 + mass 6 assembly: therefore, in both situations a self-limitation effect of the input current is obtained.

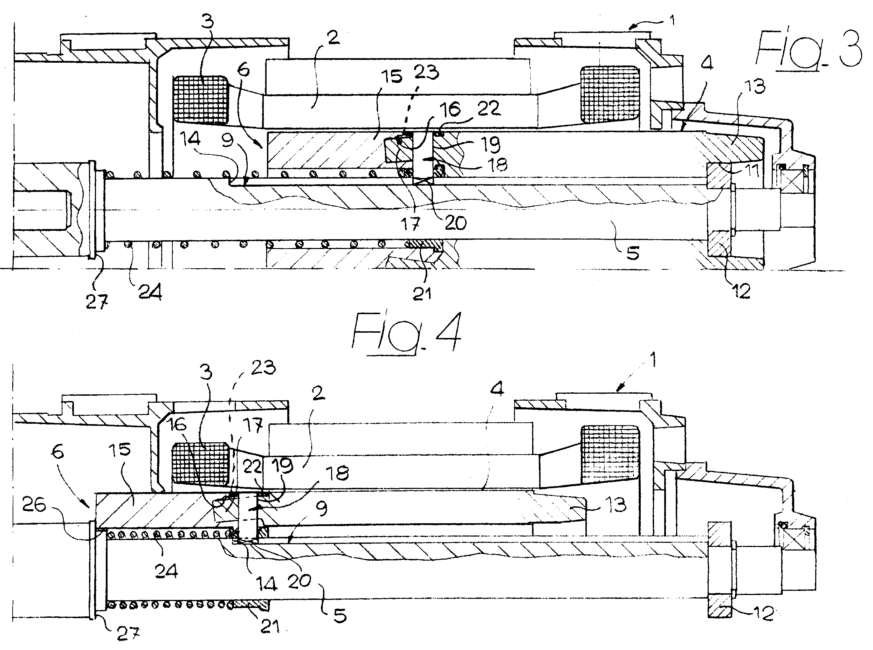

When the motor is stopped, i.e. in the absence of supply to the stator 2 winding, the rotor 4 + mass 6 assembly returns from the position of figure 2 to the initial position of figure 1. This can be performed merely by gravity, provided that the motor 1 is installed with its axis inclined downwardly towards the above initial position, or employing a return elastic device, such as disclosed in the following with reference to the alternative embodiment shown in figures 3 and 4.

This alternative embodiment, in which parts which are identical or similar to those already previously disclosed are designated with the same reference numerals, differs constructively but not conceptually nor functionally from the embodiment disclosed in the above, solely in connection with the ferromagnetic material mass 6 configuration and with the way of securing thereof to the rotor 4.

The ferromagnetic material mass 6 is constituted in this case by a one-piece ring 15, also made of iron or cast iron, fixedly attached to the rotor 4 through the aluminium rotor squirrel cage upon casting thereof over the rotor lamination stack. To such effect the ring 15, at its end facing toward the rotor 4, is formed with a front annular recess 16 which is suitably shaped (for instance, according to the shown example, with a slanting cross-section) for anchoring relative to the rotor 4. The corresponding terminal short-circuit ring 17 of the rotor 4 cage is casted into the recess 16. In this way, the ring 15 is supported onto the support shaft 5 by the rotor 4 itself. The final coupling of the rotor 4 + ring 15 + shaft 5 assembly is then carried out by means of a cylindrical radial pin 18, fitted across a bore 19 of the rings 15 and 17, and having an inner quadrangular head 20 engaged into the helical groove 9 of the shaft 5. The pin 18 is thus able at the same time to transmit the rotor 4 torque to the shaft 5, and to longitudinally slide relative thereto. The hydraulic fluid within which the motor 1 is immersed ensures proper lubrication to the contacting surfaces between the head 20 and the helical groove 9, during displacement of the rotor 4 + ring 15 assembly from the initial position of figure 3 to the final position of figure 4, and vice versa.

In order to complete rotational coupling between the ring 17 of the rotor 4 and the ring 15 additional inner peripheral seats may further be provided in correspondence of the annular seat 16, one of which is diagrammatically shown as 23, which are made by milling or drilling and then filled, upon casting of the rotor 4 cage, by aluminium portions of the ring 17.

In this variant the stop element of the rotor 4 + ring 15 assembly in the initial position of figure 3 is constituted by the ring 12 mounted on the shaft 5, which performs the above-disclosed hydraulic damping with the aluminium ring 13. The stop element in the final position, shown in figure 4, of the rotor 4 + ring 15 assembly is constituted by a shoulder 27 of the shaft 5 against which the ring 15 comes into abutment, thus performing the above-disclosed hydraulic damping.

In the final position of figure 4, with the ring 15 being displaced outwardly of the stator 2, when the main flux generated by the stator 2 is affecting the entire rotor cage, a reactance would still remain due to leakage of the flux generated by the current flowing through the aluminium ring 17 casted within the ring 15, which flux would find in the ring 15 itself closure of a low-reluctance path. In order to reduce this leakage reactance during load operation following starting of the motor, the invention provides interposition of two nonmagnetic spacers 21 and 22, possibly fixed to each other, between the ring 15 and the rotor 4 lamination pack. These rings 21, 22, which may be made of brass, bronze or other nonmagnetic materials, define a fixed assembly together with the ring 15 and rotor 4 upon aluminium casting of the rotor cage within which they are embodied.

Reference numeral 24 designates a return spring of the rotor 4 + ring 15 assembly to the initial position following stop of the motor 1.

Operation of the variant according to figures 3 and 4 is entirely corresponding to what has been previously disclosed with reference to the embodiment of figures 1 and 2, and same are the related advantages (high reactance and consequent reduced current/torque upon starting, current self-limitation in case of operation with one missing phase or with wrong rotation direction).

Naturally, the details of construction and the embodiments may be widely varied with respect to what has been disclosed and illustrated, without thereby departing from the scope of the present invention, such as defined in the appended claims.

## Claims

1. Asynchronous electrical motor, particularly suitable to drive, in a fully immersed condition in oil, a hydraulic lift or hoist, comprising an outer annular stator (2) and an inner annular rotor (4) coaxial with the stator (2) and coupled onto a support and power transmission shaft (5), characterised in that:
- the rotor (4) is axially slidable with respect to the stator (2), along said support shaft (5), between an initial start-up position in which it is partially located outside of the stator (2), and a final end-of-start position in which it is entirely positioned inside of the stator (2);
- a ferromagnetic material mass (6) is rigidly secured to the rotor (4), which in said initial position of the rotor (4) is located inside of the stator (2) and in said final position of the rotor (4) is positioned outside of the stator (2).

2. Electrical motor according to claim 1, characterised in that a helical coupling (9,10; 9,20) with said support shaft (5) is provided for axial displacement of said rotor (4) and ferromagnetic material mass (6) between said initial and final positions.

3. Electrical motor according to claim 1 or claim 2, characterised in that it comprises return elastic means (24) urging the rotor (4) with said ferromagnetic material mass (6) towards said initial position.

4. Electrical motor according to claim 1 or claim 2, characterized in that in use said motor is positioned with the support shaft (5) inclined downwardly toward said initial position of the rotor (4), whereby return of the rotor (4) with said ferromagnetic material mass (6) from the terminal position to the initial position is performed by gravity.

5. Electrical motor according to claim 1 or claim 2, characterised in that it comprises fluid damping means (11,12,13,14,25,26 and 15,27) for braking axial displacement of said rotor (4) with said ferromagnetic material mass (6) at the end of displacement thereof toward said final and said initial positions.

6. Electrical motor according to claim 5, characterised in that said fluid damping means employ the oil within which the motor (1) is immersed.

7. Electrical motor according to claim 2, characterised in that said ferromagnetic material mass (6) is constituted by a pack of blank annular disks (7) placed at one side of the rotor (4) and rigidly fixed thereto.

8. Electrical motor according to claim 7, characterised in that the support shaft (5) is formed with an outer helical groove (9) into which radial entrainment teeth (10) projecting innerly of said annular disks (7) are engaged.

9. Electrical motor according to claim 2, characterized in that said ferromagnetic material mass (6) is constituted by a one-piece ring (15) placed at one side of the rotor (4) and supported thereby.

10. Electrical motor according to claim 9, characterized in that:
- a shaped annular front anchoring recess (16) is formed on said ferromagnetic material ring (15), at the end thereof facing toward the rotor (4),
- said rotor (4) is of the aluminium-cast squirrel cage type, whose end facing toward said ferromagnetic material ring (15), defining one of the short-circuit terminal rings (17) of the cage, is directly fitted upon casting into said shaped annular front recess (16), for supporting and anchoring said ferromagnetic material ring (15) with respect to rotational entrainment thereof.

11. Electrical motor according to claim 10, characterized in that said short-circuit terminal ring (17) of the rotor (4) is further secured to said ferromagnetic material ring (15) by means of additional seats (23) formed peripherally of said shaped annular front recess (16), and through a radial coupling pin (18).

12. Electrical motor according to claim 11, characterized in that a helical groove (9) is formed on the support shaft (5), within which the radially inner end (20) of said coupling pin (18) is engaged, acting as an entraining member.

13. Electrical motor according to any of claims 10 through 12, characterized in that annular spacer members (21,22) made of nonmagnetic material are axially interposed between the lamination pack of the rotor (4) and said ferromagnetic material ring (15) so as to reduce reactance corresponding to the leakage flux generated by the current flowing through said short-circuit terminal ring (17) during load operations of the motor (1) following start.

## Amended claims

### Amended claims in accordance with Rule 86(2) EPC.

1. Asynchronous electrical motor, particularly suitable to drive, in a fully immersed condition in oil, a hydraulic lift or hoist, comprising an outer annular stator (2) and an inner annular rotor (4) coaxial with the stator (2) and coupled onto a support and power transmission shaft (5), wherein:
- the rotor (4) is axially slidable with respect to the stator (2), along said support shaft (5), between an initial start-up position in which it is partially located outside of the stator (2), and a final end-of-start position in which it is entirely positioned inside of the stator (2);
- a ferromagnetic material mass (6) is rigidly secured to the rotor (4), which in said initial position of the rotor (4) is located inside of the stator (2) and in said final position of the rotor (4) is positioned outside of the stator (2),
characterised in that a helical coupling (9,10; 9,20) between said rotor (4) with said ferromagnetic material mass (6) and said support shaft (5) is provided in order to cause axial displacement of said rotor (4) with said ferromagnetic material mass (6) between said initial and final positions when the rotor (4) is subject to a rotational torque in a properly selected operative direction which depends on orientation of said helical coupling (9,10; 9,20).
2. Electrical motor according to claim 1, characterised in that it comprises return elastic means (24) urging the rotor (4) with said ferromagnetic material mass (6) towards said initial position.
3. Electrical motor according to claim 1, characterised in that in use said motor is positioned with the support shaft (5) inclined downwardly toward said initial position of the rotor (4), whereby return of the rotor (4) with said ferromagnetic material mass (6) from the terminal position to the initial position is performed by gravity.
4. Electrical motor according to claim 1, characterised in that it comprises fluid damping means (11,12,13,14,25,26 and 15,27) for braking axial displacement of said rotor (4) with said ferromagnetic material mass (6) at the end of displacement thereof toward said final and said initial positions.
5. Electrical motor according to claim 4, characterised in that said fluid damping means employ the oil within which the motor (1) is immersed.
6. Electrical motor according to claim 1, characterised in that said ferromagnetic material mass (6) is constituted by a pack of blank annular disks (7) placed at one side of the rotor (4) and rigidly fixed thereto.
7. Electrical motor according to claim 6, characterised in that the support shaft (5) is formed with an outer helical groove (9) into which radial entrainment teeth (10) projecting innerly of said annular disks (7) are engaged.
8. Electrical motor according to claim 1, characterised in that said ferromagnetic material mass (6) is constituted by a one-piece ring (15) placed at one side of the rotor (4) and supported thereby.
9. Electrical motor according to claim 8, characterised in that:
- a shaped annular front anchoring recess (16) is formed on said ferromagnetic material ring (15), at the end thereof facing toward the rotor (4),
- said rotor (4) is of the aluminium-cast squirrel cage type, whose end facing toward said ferromagnetic material ring (15), defining one of the short-circuit terminal rings (17) of the cage, is directly fitted upon casting into said shaped annular front recess (16), for supporting and anchoring said ferromagnetic material ring (15) with respect to rotational entrainment thereof.
10. Electrical motor according to claim 9, characterised in that said short-circuit terminal ring (17) of the rotor (4) is further secured to said ferromagnetic material ring (15) by means of additional seats (23) formed peripherally of said shaped annular front recess (16), and through a radial coupling pin (18).
11. Electrical motor according to claim 10, characterised in that a helical groove (9) is formed on the support shaft (5), within which the radially inner end (20) of said coupling pin (18) is engaged, acting as an entraining member.
12. Electrical motor according to any of claims 9 through 11, characterised in that annular spacer members (21,22) made of nonmagnetic material are axially interposed between the lamination pack of the rotor (4) and said ferromagnetic material ring (15) so as to reduce reactance corresponding to the leakage flux generated by the current flowing through said short-circuit terminal ring (17) during load operations of the motor (1) following start.
